# EUROPÄISCHE PATENTSCHRIFT

(11) **EP 1 203 940 B1**
(45) Veröffentlichungstag und Bekanntmachung des Hinweises auf die Patenterteilung: **22.02.2006**
(21) Anmeldenummer: 00126468.8
(22) Anmeldetag: 07.12.2000
(51) Int. Cl.: G01N 21/17, G01N 21/25, G01B 11/24

(54) **Fotoelektrische Messvorrichtung**
Photoelectric measuring apparatus
Appareil de mesure photoélectrique

(30) Priorität: 26.10.2000 IT BZ000045
(43) Veröffentlichungstag der Anmeldung: 08.05.2002
(73) Patentinhaber: Viptronic GmbH, 39042 Brixen (IT)
(72) Erfinder: Pallingen, Hans, 39042 Brixen (IT)
(74) Vertreter: Schwabe - Sandmair - Marx

(56) Entgegenhaltungen:
- GB-A- 2 082 015
- US-A- 4 390 277
- US-A- 4 511 248
- US-A- 4 719 912
- US-A- 5 004 339
- US-A- 5 966 205

## Beschreibung

Die Erfindung betrifft ein Densitometer oder Farbmessgerät für die Reproduktion und den Druck zur, fotoelektrischen Ausmessung eines Messobjekts gemäss dem Anspruch 1.

Messgeräte für optische Vermessungen von Bildern oder Testfeldern auf Papier oder Filmen haben immer eine feste Messfeldgrösse. Solche Instrumente werden vor allem im Druck oder im fotografischen Bereich verwendet. Typische Messgeräte sind z.b. Densitometer und Farbmessgeräte.

Das Densitometer ist das am weitesten verbreitete Messgerät in Reproduktion und Druck. Densitometer sind als Handgeräte, Tischgeräte, Messtische ausgebildet oder auch direkt in eine Produktionsmaschine, wie z.B. eine Druckmaschinen oder ein fotographisches Minilab, eingebaut. Bei Aufsichtsvorlagen dienen sie zur Ermittlung der optischen Farbschichtdicke (Farbdichte) der einzelnen Farbschichten (Cyan, Magenta, Gelb und Schwarz und auch Blau, Grün, Rot), aber auch zur Erfassung des Tonwertes, d.i. ein mit der Grösse des Rasterpunktes zusammenhängender Wert, und anderer davon abgeleiteter Messgrössen. Durchlichtinstrumente ermitteln Farbdichten, Rasterpunktgrössee und Ableitungen davon.

Farbmessgeräte erlauben die messtechnische Bestimmung von visuellen Farbeindrükken und deren quantitative Beschreibung durch Farbwerte in verschiedenen genormten Farbräumen.

Es sind auch optisch-elektronische Messgeräte auf dem Markt, die nicht den vorgenannten Messgerätefamilien entsprechen, z.B. als Einbaugeräte in Druckmaschinen.

Alle diese Geräte haben den Nachteil einer festen Messfeldgrösse. In der Praxis ist aber oft eine veränderbare Messfeldgrösse wünschbar bzw. erforderlich. Der Wunsch nach einer änderbaren Messgrösse kann unterschiedliche Ursachen haben, z.B.:
- Druckträger (Papier, Karton, Kunststoff-Folie usw.) mit grober Struktur müssen mit einem grossen Messfleck vermessen werden.
- Hochqualitativer Druck auf hochwertigem Papier mit feinem Detail erfordert einen kleinen Messfleck.
- Grobe Raster, z.B. Zeitung, müssen mit großen Messfleck vermessen werden. Vermessen von Linien erfordert einen kleinen Messfleck.

Es sind zwar schon Messgeräte bekannt, bei denen durch teilweises oder völliges Auswechseln der Mess-Optik die Messfeldgröße veränderbar ist. Die Handhabung dieser Messgeräte ist aber unpraktisch, besonders bei Einsatz der Messgeräte im Produktionsprozess oder in laufenden Druckmaschinen. Außerdem sind solche Geräte auch konstruktiv relativ aufwendig und deshalb teuer.

Die GB-A-2 082 015, die aus dem Fachgebiet der Luft- und Raumfahrttechnik stammt, offenbart ein Messsystem, das speziell in Flugzeugen und Satelliten eingesetzt wird und zu Messungen in Bezug auf die Erdoberfläche und/oder darüber befindlichen Wolken dient. Bevorzugt wird die Messung im Infraroten durchgeführt.

Aus der US-A-5,966,205 ist eine Vorrichtung bekannt, die zur Erfassung und Verhinderung von Fälschungen dienen soll. Hier wird mit einem Messfeld gearbeitet, das verschiedene konzentrische Ringe von Sensoren aufweist. Über eine Glasfaser wird Licht auf ein Messobjekt gestrahlt, und mit auf einen oder mehreren Kreisen angeordneten farbempfindlichen Sensoren wird die von einem Dokument oder einer Probe zurückgeworfene Reflexion erfasst und analysiert.

Durch die Erfindung soll nun eine Vorrichtung der gattungsgemäßen Art dahingehend verbessert werden, dass verschiedene Messfeldgrößen zur Verfügung stehen, die ohne Bewegung oder Auswechslung von mechanischen und/oder optischen Komponenten angewählt werden können.

Die Lösung dieser der Erfindung zugrunde liegenden Aufgaben ergibt sich durch die erfindungsgemäße Messvorrichtung gemäß dem Anspruch 1. Besonders zweckmäßige und vorteilhafte Ausgestaltungen sind Gegenstand der abhängigen Ansprüche.

Gemäß dem grundlegenden Hauptaspekt der vorliegenden Erfindung ist also der fotoelektrische Sensor in zwei oder mehrere konzentrische Teil-Sensoren aufgeteilt, die selektiv an die Steuerelektronik angeschaltet werden können, so dass ein mehr oder weniger großes effektives Messfeld erfasst wird. Die Auswahl der verschiedenen Messfeldgrößen kann damit ohne bewegte mechanische und optische Komponenten rein elektronisch erfolgen, wodurch die Umschaltung von einer zur anderen Messfeldgröße mit höchster Geschwindigkeit möglich wird.

Im folgenden wird die Erfindung anhand der Zeichnung näher erläutert. Es zeigen:
- Fig. 1: ein Prinzipschema eines typischen Ausführungsbeispiels der erfindungsgemäßen Messvorrichtung und
- Fig. 2: eine schematische Aufsicht auf den fotoelektrischen Sensor der Messvorrichtung der Figur 1.

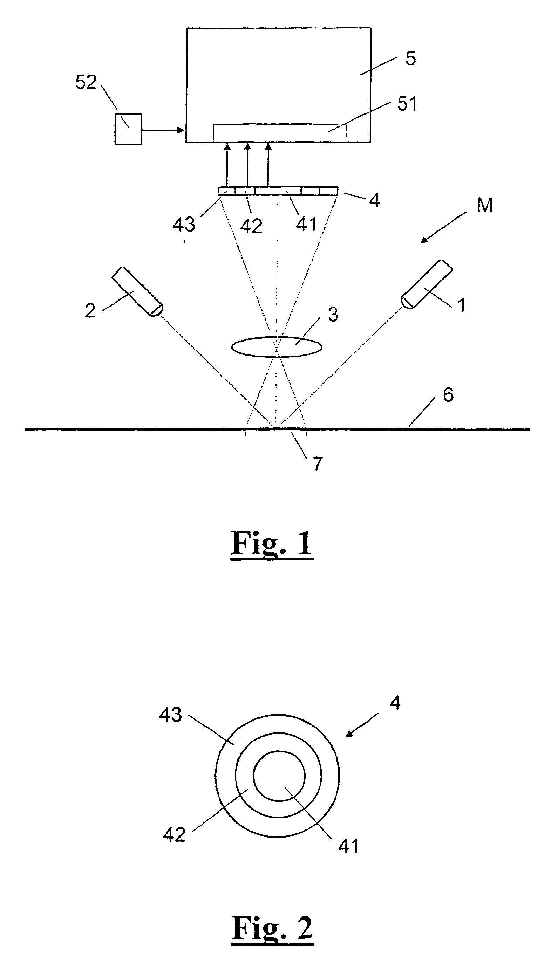

Die in Fig. 1 als Ganze mit M bezeichnete Messvorrichtung ist als Remissionsmessgerät ausgebildet und umfasst in an sich bekannter Weise eine aus (im Beispiel zwei) Lampen 1 und 2 bestehende Lichtquelle, ein Messobjektiv 3, einen fotoelektrischen Sensor 4 und eine Steuerelektronik 5. Wie bei Messgeräten dieser Art üblich, beleuchten die Lampen 1 und 2 ein auszumessendes Messobjekt 6 unter 45°, und das Messobjektiv 3 fängt das vom Messobjekt remittierte Messlicht unter 0° auf und beaufschlagt damit den Sensor 4. Die Steuerelektronik 5 wandelt die vom Sensor 4 erzeugten, der Intensität des empfangenen Lichts entsprechenden analogen elektrischen Signale in entsprechende digitale Messwerte um und berechnet daraus dann die gewünschten Messgrössen oder stellt die digitalen Messwerte einem externen Rechner zur weiteren Verarbeitung zur Verfügung.

Soweit entspricht die erfindungsgemässe Messvorrichtung herkömmlichen Messvorrichtungen dieser Art, so dass der Fachmann diesbezüglich keiner näheren Erläuterung bedarf. Für die Ausmessung von transparenten Messobjekten muss die Lichtquelle natürlich an der dem Sensor abgewandten Seite des Messobjekts angeordnet sein bzw. kann die Lichtquelle der Messvorrichtung selbst auch entfallen, sofern eine andere Beleuchtung vorhanden ist.

Der erfindungswesentliche Unterschied zum Stand der Technik besteht in der Ausbildung des fotoelektrischen Sensors 4. Dieser ist gemäss der Erfindung aus zwei oder mehreren konzentrisch angeordneten Teil-Sensoren 41, 42, 43 aufgebaut. Der innerste Teilsensor 41 ist kreisförmig, die äusseren Teil-Sensoren 42 und 43 sind ringförmig ausgebildet. Die Figur 2 verdeutlicht dies. Die praktische Realisierung der Teil-Sensoren 41-43 kann durch entsprechend geformte einzelne Foto-Dioden oder durch eine entsprechende kreis- bzw. ringförmige Anordnung von mehreren oder vielen kleineren Fotodioden oder ähnlichen fotoelektrischen Wandlem erfolgen.

Die Steuerelektronik 5 ist mit an sich bekannten elektronischen Umschaltmitteln 51 ausgestattet, mit denen die Signale von den (hier drei) Teil-Sensoren 41-43 ausgewählt bzw. aus der weiteren Verarbeitung ausgeschlossen werden können. Die Umschaltmittel 51 können in an sich bekannter Weise z.B. über Bedienungsknöpfe 52 oder programmgesteuert angesteuert werden.

Das Messobjektiv 3 ist so angeordnet und ausgelegt, dass es ein nominelles grösstes Messfeld 7 von z.B. 3-5 mm Durchmesser flächenfüllend scharf auf den gesamten Sensor 4 abbildet, so dass also auch der äusserste Teil-Sensor 43 noch voll ausgeleuchtet ist. Wenn die Steuerelektronik 5 mittels der Umschaltmittel 51 die Signale aller Teil-Sensoren 41-43 zur Messwertbildung heranzieht, wird ein effektives Messfeld von (in diesem Fall) 3-5 mm Durchmesser gemessen. Wenn die Signale des äussersten bzw. auch des mittleren Teil-Sensors 43 bzw. 42 nicht für die Messwertbildung berücksichtigt werden, so entspricht die effektive Messfeldgrösse dem Durchmesserverhältnis des mittleren Teil-Sensors 42 bzw. inneren Teil-Sensors 41 zum äussersten Teil-Sensor 43 (jeweils bezogen auf den Aussendurchmesser).

Durch den erfindungsgemässen Einsatz eines aus mehreren Teil-Sensoren aufgebauten oder in solche unterteilten fotoelektrischen Sensors oder fotoelektrischen Wandlers ist eine rein elektronische und deshalb sehr schnelle Auswahl bzw. Umschaltung verschiedener effektiver Messfeldgrössen möglich.

Selbstverständlich können auch nur zwei Teil-Sensoren oder mehr als drei Teil-Sensoren vorgesehen sein.

Durch Ergänzung um farbselektive und/oder spektral auflösende optische Komponenten kann die gezeigte Messvorrichtung in an sich bekannter Weise als Densitometer oder Farbmessgerät ausgebildet werden.

## Patentansprüche

1. Densitometer oder Farbmessgerät für Reproduktion und Druck zum fotoelektrischen Ausmessen eines Messobjekts, mit einem fotoelektrischen Sensor (4) und einem Messobjektiv (3), welches das von einem Messfleck des Messobjekts (6) ausgehende Messlicht auf den Sensor (4) leitet, sowie mit einer mit dem Sensor (4) zusammenarbeitenden Steuerelektronik (5) zur Verarbeitung der von diesem erzeugten elektrischen Signale, wobei der Sensor (4) mindestens zwei getrennt ansteuerbare and wobei konzentrisch zu einander angeordnete Teil-Sensoren (41,42,43) umfasst, und die Steuerelektronik (5) Umschaltmittel (51) aufweist, mittels welcher die Teil-Sensoren (41-43) zur Änderung der Messfeldgröße selektiv zu- bzw. abgeschaltet werden können.

2. Vorrichtung nach Anspruch 1, **dadurch gekennzeichnet, dass** der Sensor (4) mindestens drei Teil-Sensoren (41,42,43) aufweist.

3. Vorrichtung nach Anspruch 1 oder 2, **dadurch gekennzeichnet, dass** das Messobjektiv (3) so ausgelegt ist, dass es ein größtes nominelles Messfeld flächenfullend auf die Gesamtheit aller Teil-Sensoren (41,42,43) abbildet.

4. Vorrichtung nach einem der vorangehenden Ansprüche, **dadurch gekennzeichnet, dass** die Teil-Sensoren (41,42,43) durch kreis- bzw. kreisringförmige Fotodioden oder Fotodioden-Anordnungen gebildet sind.

## Claims

1. A densitometer or colorimeter for reproduction and printing for the photoelectric measurement of a measurement object, having a photoelectric sensor (4) and an objective (3), which directs the light coming from a measuring spot of the measurement object (6) to the sensor (4), and also having control electronics (5) cooperating with the sensor (4) for processing the electrical signals produced thereby, wherein the sensor (4) comprises at least two partial sensors (41, 42, 43) that can be separately controlled and are disposed concentrically to each other, and wherein the control electronics (5) comprise switchover means (51) by means of which the partial sensors (41-43) can be selectively switched on and off to change the size of the measurement field.

2. An apparatus according to Claim 1,
**characterised in that** the sensor (4) comprises at least three partial sensors (41, 42, 43).

3. An apparatus according to Claim 1 or 2,
**characterised in that** the measurement objective (3) is designed so that it images a largest nominal measurement field onto the entirety of all partial sensors (41, 42, 43) to fill the space.

4. An apparatus according to one of the preceding Claims,
**characterised in that** the partial sensors (41, 42, 43) are formed by circular or annular photodiodes or photodiode configurations.

## Revendications

1. Densimètre ou appareil de mesure de couleur pour la reproduction et l'impression, pour la mesure photo-électrique d'un objet de mesure, comportant un capteur photo-électrique (4) et un objectif de mesure (3) qui guide sur le capteur (4) la lumière de mesure partant d'un spot de mesure de l'objet de mesure (6), ainsi qu'une électronique de commande (5) coopérant avec le capteur (4), pour traiter les signaux électriques générés par celui-ci, le capteur (4) comprenant au moins deux capteurs partiels (41, 42, 43) pouvant être commandés séparément et disposés concentriquement l'un à l'autre, et l'électronique de commande (5) comportant des moyens de commutation au moyen desquels les capteurs partiels (41-43) peuvent être activés ou désactivés de façon sélective pour modifier la dimension du champ de mesure.

2. Dispositif selon la revendication 1, **caractérisé en ce que** le capteur (4) comporte au moins trois capteurs partiels (41, 42, 43).

3. Dispositif selon la revendication 1 ou 2, **caractérisé en ce que** l'objectif de mesure (3) est dimensionné de manière à reproduire un champ de mesure nominal maximal en remplissant toute la surface, sur la totalité des capteurs partiels (41, 42, 43).

4. Dispositif selon l'une des revendications précédentes, **caractérisé en ce que** les capteurs partiels (41, 42, 43) sont formés par des photodiodes de forme circulaire ou de forme annulaire circulaire ou par des agencements de photodiodes.
